# EUROPÄISCHE PATENTSCHRIFT

(11) **EP 1 360 399 B1**
(45) Veröffentlichungstag und Bekanntmachung des Hinweises auf die Patenterteilung: **29.08.2007**
(21) Anmeldenummer: 02716675.0
(22) Anmeldetag: 23.01.2002
(51) Int. Cl.: F01M 1/06, F16C 3/14

(54) **SCHMIERÖLVERSORGUNG FÜR DIE PLEUELLAGER EINER KURBELWELLE EINER MEHRZYLINDRIGEN BRENNKRAFTMASCHINE**
SUPPLY OF LUBRICATING OIL FOR THE CONNECTING ROD BEARING OF A CRANKSHAFT OF A MULTICYLINDER INTERNAL COMBUSTION ENGINE
ALIMENTATION D'HUILE DE GRAISSAGE POUR LES COUSSINETS DE BIELLE D'UN VILEBREQUIN D'UN MOTEUR A COMBUSTION INTERNE MULTICYLINDRE

(30) Priorität: 07.02.2001 DE 10105542
(43) Veröffentlichungstag der Anmeldung: 12.11.2003
(73) Patentinhaber: Dr. Ing. H.C.F. Porsche Aktiengesellschaft, 70435 Stuttgart (DE)
(72) Erfinder: RONNEBURGER, Ralph, 75428 Illingen-Schützingen (DE); BENZ, Matthias, 71739 Oberriexingen (DE)
(86) Internationale Anmeldenummer: PCT/EP2002/000604
(87) Internationale Veröffentlichungsnummer: WO 2002/063143

(56) Entgegenhaltungen:
- US-A- 4 928 550
- US-A- 5 138 991
- US-A- 5 152 373
- US-A- 5 163 341
- US-A- 5 799 547
- US-B1- 6 202 620
- US-B1- 6 332 443

## Beschreibung

Die Erfindung geht aus von einer Schmierölversorgung für die Pleuellager einer Kurbelwelle einer mehrzylindrigen Brennkraftmaschine nach den Merkmalen des Oberbegriffs des Anspruchs 1.

Aus der US 57 99 547 A ist eine Schmierölversorgung für die Pleuellager einer Kurbelwelle einer mehrzylindrigen Brennkraftmaschine bekannt, bei der von den Lagerzapfen zu den Kurbelzapfen der Kurbelwelle Ölkanäle führen, wobei die Ölzufuhr über die Hauptlager der Kurbelwelle derart erfolgt, dass zwei unter einem Winkel verlaufende Ölbohrungen vorgesehen sind, die zu einer Ölbohrung zusammengeführt wird, um mindestens einen angrenzenden Kurbelzapfen mit Schmieröl zu versorgen.

In der DE 69 605 567 T2 ist eine Kurbelwelle für einen 4- Zylinder- Reihenmotor dargestellt, bei dem über die Lagerzapfen bzw. Hauptlager der Kurbelwelle die Schmierölversorgung für die beidseitig an das Hauptlager angrenzenden Kurbelzapfen bzw. Pleuellager über in der Kurbelwelle eingebrachte Ölbohrungen erfolgt. Durch die Schmierölversorgung von jeweils zwei Pleuellagern über ein Kurbelwellen-Hauptlager kann das mittlere Hauptlager frei von Ölversorgungsbohrungen bzw. Ölversorgungsnuten bleiben.

Es ist weiterhin bekannt (siehe z. B. FR-PS 979 586), in den Hauptlagerschalen der Kurbelwelle Teil - Ölversorgungsnuten einzubringen, die verschwenkt zur Gaskraftebene angeordnet sind. Über zwei im Lagerzapfen der Kurbelwelle eingebrachte Ölbohrungen wird dabei eine permanente Schmierölversorgung des Pleuellagers über die Teil - Ölversorgungsnuten sicher gestellt; gleichzeitig kann der Traganteil des Hauptlagers in Richtung der Gaskraftebene beibehalten werden.

Aufgabe der Erfindung ist es, eine Schmierölversorgung für die Pleuellager einer Kurbelwelle einer mehrzylindrigen Brennkraftmaschine bereit zu stellen, bei der einerseits eine sichere und zuverlässige Schmierölversorgung der Pleuellager der Kurbelwelle gewährleistet ist, und bei der andererseits die insbesondere im Hochdrehzahlbereich stärker belasteten Hauptlager der Kurbelwelle sicher die Gas- und Massenkräfte aufnehmen können.

Die Lösung der Aufgabe erfolgt durch die im Anspruch 1 angegebenen Merkmale.

Es hat sich insbesondere bei einem 6- Zylinder- Boxermotor mit 120° Zündabstand gezeigt, dass ab einem bestimmten Drehzahlniveau die Lagerkräfte, die auf die Hauptlager einwirken, bei denen die links und rechts durch die Kurbelzapfen übertragenen oszillierenden Massenkräfte nicht ausgeglichen sind, deutlich ansteigen, während die Lagerkräfte bei den Hauptlagern, dessen angrenzendes Kurbelzapfenpaar um 180° Kurbelwinkel versetzt zueinander angeordnet ist, aufgrund des Ausgleichs der oszillierenden Massenkräfte im wesentlichen drehzahlunabhängig konstant bleiben. Das vorgeschlagene Schmieröl-Versorgungskonzept für die Pleuellager trägt diesem Umstand Rechnung; gleichzeitig kann trotz unterschiedlicher Lagerbelastungen die gleiche Breite für alle Hauptlager beibehalten werden.

Um den Traganteil der für die Schmierölversorgung verantwortlichen Hauptlager beibehalten zu können, wird vorgeschlagen, diese Hauptlager lediglich mit Teil - Ölversorgungnuten zu versehen, die in Wechselwirkung mit jeweils zwei im Lagerzapfen eingebrachte Ölbohrungen stehen, damit alternierend über jeweils eine Ölbohrung eine kontinuierliche Schmierölversorgung der Pleuellager sicher gestellt ist. Die Ölversorgungsnuten sind dabei um ca. 90° zur Gaskraftebene verschwenkt angeordnet, so dass der Traganteil der Hauptlager in Richtung der angreifenden Hauptkräfte nicht reduziert ist.

In den Unteransprüchen sind weitere vorteilhafte Ausgestaltungen und Verbesserungen der erfindungsgemäßen Schmierölversorgung für die Pleuellager einer Kurbelwelle dargestellt.

Eine Ausführungsbeispiel der Erfindung ist in der nachfolgenden Beschreibung und Zeichnung näher erläutert.

Es zeigen:
- Fig. 1: eine Kurbelwelle einer mehrzylindrigen Brennkraftmaschine,
- Fig. 2: einen Schnitt entlang der Linie II - 11 in Fig. 1 und
- Fig. 3: eine schematische Darstellung der Schmierölversorgung im Bereich eines Hauptlagers.

### Beschreibung des Ausführungsbeispiels

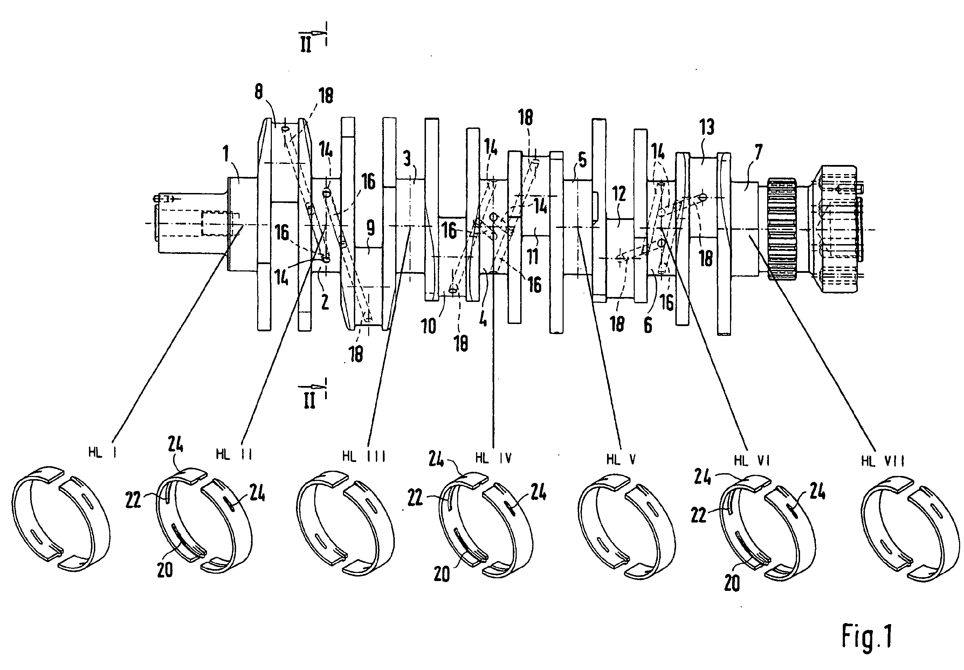

Die in Fig. 1 dargestellte Kurbelwelle eines 6 - Zylinder - Boxermotors weist sieben Lagerzapfen 1 bis 7 auf, die in Hauptlagerschalen I - VII aufgenommen sind. Die Hauplagerschalen I - VII finden dabei, wie allgemein bekannt, Aufnahme in entsprechenden Lagerstühlen des Kurbelwellengehäuses (nicht dargestellt) der Brennkraftmaschine. Die Kurbelwelle ist sechsfach gekröpft, wobei an den Kurbelzapfen 8 bis 13 die Pleuelfüße der nicht dargestellten Pleuel drehbar befestigt sind. Wie bei einem 6- Zylinder-Boxermotor mit 120° Zündabstand üblich, sind die an die Lagerzapfen 2, 4, 6 angrenzenden Kurbelzapfen 8, 9 bzw. 10, 11 bzw. 12, 13 um jeweils 180° Kurbelwinkel versetzt zueinander angeordnet, während diese drei Kurbelpaarungen wiederum jeweils um 120° Kurbelwinkel versetzt zueinander angeordnet sind.

In den Lagerzapfen 2, 4, 6 sind jeweils zwei, unter einem Winkel von 90° zueinander verlaufende Bohrungen 14 und 16 angeordnet, die zu einer Ölbohrung 18 zusammengeführt, zu den beiden angrenzenden Kurbelzapfen 8, 9 bzw. 10, 11 bzw. 12, 13 geführt sind.

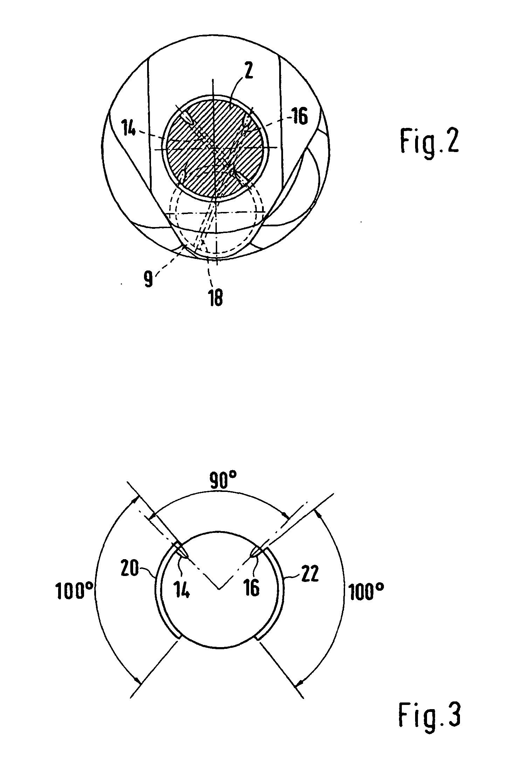

Die Hauptlagerschalen II, IV und VI verfügen über zwei Teil- Ölversorgungsnuten 20 und 22, die sich wie in Fig. 3 dargestellt, über einen Kreisbogenwinkel von jeweils 100° erstrecken. Auf der Außenseite der Hauplagerschalen II, IV und VI sind jeweils vier Außennute 24 angeordnet, von denen nur zwei sichtbar dargestellt sind und die zumindest über eine Bohrung mit den innen liegenden Teil- Ölversorgungsnuten 20 und 22 in Verbindung stehen.

Im eingebauten Zustand der Kurbelwelle im Kurbelgehäuse des Boxer- Motors sind die Ölversorgungsnuten 20 und 22 in den Hauptlagerschalen II, IV und VI jeweils so eingebracht, dass sie sich um 90° versetzt zur Gaskraftebene über einen Winkel von ca. 100° erstrecken.

Die Schmierölversorgung für die an den Kurbelzapfen 8 bis 13 befestigten Pleuellager erfolgt auf folgende Art und Weise:
Über eine nicht dargestellte Schmieröl-Förderpumpe werden über im Kurbelgehäuse angeordnete Ölbohrungen die Hauptlager II, IV und VI mit Schmieröl versorgt. Dazu gelangt das Schmieröl über die außen an den Hauptlagerschalen II, IV und VI angeordneten Ölnute 24 in die auf der Innenseite der Hauptlagerschalen vorgesehenen Teil- Ölversorgungsnuten 20 und 22, wobei das Schmieröl alternierend über die Ölbohrung 14 oder 16 und über die Ölbohrung 18 zu den Kurbelzapfen 8, 9 bzw. 10, 11 bzw. 12, 13 gelangt. Das an der Oberfläche der Kurbelzapfen 8, 9 bzw. 10, 11 bzw. 12, 13 austretende Schmieröl dient dabei der Schmierung der auf den Kurbelzapfen drehbar befestigten Pleuellager. Dadurch, dass die Teil- Ölversorgungsnuten 20 und 22 sich über einen Winkelbereich von 100° erstrecken und dass die beiden Bohrungen 14 und 16 unter einem Winkel von 90° angeordnet sind, ist sicher gestellt, dass zumindest über jeweils eine der beiden Bohrungen 14 oder 16 eine permanente Schmierölzufuhr zu den Kurbelzapfen erfolgt. Andererseits werden die in Richtung der Zylinderachse wirkenden und sich vektoriell addierenden Gas- und Massenkräfte sicher durch die nicht mit der Ölversorgungsnut versehenen Hauptlagerschalensegmente aufgenommen, die bezüglich ihrer Tragbreite gegenüber den Hauptlagerschalen 1, 3, 5 und 7 nicht reduziert sind.

Während die aufgrund der oszillierenden Massenkräfte hervorgerufenen Lagerbelastungen in den Hauptlagern II, IV und VI unabhängig von der Motordrehzahl nahezu konstant bleiben, steigen insbesondere die auf die Hauptlager III und V einwirkenden Lagerkräfte auf Grund des nicht vorhandenen Massenausgleichs proportional zur Motordrehzahl an. Durch die zuvor beschriebene Vorrichtung ist einerseits eine zuverlässige Schmierölversorgung der Pleuellager sicher gestellt, andererseits werden unter Beibehaltung einer einheitlichen Lagerbreite für die Kurbelwelle die auf die Hauptlager III und V einwirkenden inneren Lagerkräfte auch bei einem Drehzahlniveau von n >7000 l/min sicher aufgenommen.

## Patentansprüche

1. Schmierölversorgung für die Pleuellager einer Kurbelwelle einer mehrzylindrigen Brennkraftmaschine, bei der von den Lagerzapfen (1 bis 7) zu den Kurbelzapfen (8 bis 13) der Kurbelwelle Ölkanäle (14, 16) führen, wobei die Ölzufuhr über die Hauptlager der Kurbelwelle erfolgt, indem von jeweils einem Hauptlager bzw. einem Lagerzapfen (2, 4, 6) aus die Ölkanäle (14, 16) zu den jeweils beidseitig angrenzenden Kurbelzapfen (8 bis 13) bzw. Pleuellagern führen, wobei in den betreffendem Lagerzapfen (2, 4, 6) der Kurbelwelle für die Schmierölversorgung der jeweils links und rechts angrenzenden Pleuellager jeweils zwei unter einem Winkel verlaufende Ölbohrungen (14, 16) vorgesehen sind, die zu einer Ölbohrung (18) zusammengeführt, zu den beiden angrenzenden Kurbelzapfen (8, 9 bzw. 10, 11 bzw. 12, 13) führen und dass die beiden Ölbohrungen (14, 16) mit in den Hauptlagern (II, IV, VI) für die Schmierölversorgung vorgesehenen Ölversorgungsnuten (20, 22) in Wechselwirkung stehen,
**dadurch gekennzeichnet, dass**
in den Hauptlagern (II, IV, VI) zwei Teil- Ölversorgungsnuten (20,22) vorgesehen sind, die um 90° verschwenkt zur Gaskraftebene angeordnet sind.

2. Schmierölversorgung nach Anspruch 1, **dadurch gekennzeichnet, dass** die Kurbelwelle für einen 6 - Zylinder - Boxermotor vorgesehen ist, bei der die beiden benachbart zu den Lagerzapfen (2, 4, 6) angeordneten Kurbelzapfen (8, 9 bzw. 10, 11 bzw. 12, 13) um 180° Kurbelwinkel versetzt zueinander angeordnet sind.

3. Schmierölversorgung nach Anspruch 1 oder 2, **dadurch gekennzeichnet, dass** die Ölbohrungen (14, 16) in den Lagerzapfen (2, 4, 6) der Kurbelwelle unter einem Winkel von ca. 90° verlaufen, während sich die Teil - Ölversorgungsnuten (20, 22) über einen Bereich von ca. 100° Kurbelwinkel erstrecken.

## Claims

1. A lubricating-oil supply for the connecting-rod bearing of a crankshaft of a multi-cylinder internal-combustion engine, in which oil ducts (14, 16) lead from the bearing journals (1 to 7) to the crankpins (8 to 13) of the crankshaft, wherein the oil is supplied via the main bearings of the crankshaft by the oil ducts (14, 16) which lead from a respective main bearing or bearing journal (2, 4, 6) to the respective adjacent crankpins (8 to 13) or connecting-rod bearings on either side, wherein, in the relevant bearing journals (2, 4, 6) of the crankshaft, two respective oil bores (14, 16) extending at an angle are provided for the lubricating-oil supply to the respective adjacent connecting-rod bearings on the left and the right, which oil bores (14, 16) are combined to form an oil bore (18) and lead to the two adjacent crankpins (8, 9 and 10, 11 and 12, 13), and wherein the two oil bores (14, 16) interact with oil-supply grooves (20, 22) provided in the main bearings (II, IV, VI) for the lubricating-oil supply, **characterised in that** two partial oil-supply grooves (20, 22) are provided in the main bearings (II, IV, VI) and are arranged so as to be offset by 90° in relation to the gas force plane.

2. A lubricating-oil supply according to claim 1, **characterised in that** the crankshaft is provided for a 6-cylinder opposed-cylinder engine, in which crankshaft the two crankpins (8, 9 and 10, 11 and 12, 13) arranged adjacent to the bearing journals (2, 4, 6) are arranged so as to be mutually offset by a crank angle of 180°.

3. A lubricating-oil supply according to claim 1 or 2, **characterised in that** the oil bores (14, 16) in the bearing journals (2, 4, 6) of the crankshaft extend at an angle of approximately 90°, while the partial oil-supply grooves (20, 22) extend over a crank-angle range of approximately 100°.

## Revendications

1. Alimentation en huile de lubrification pour les coussinets de bielle d'un vilebrequin d'un moteur à combustion interne à plusieurs cylindres, dans lequel des canaux d'huile (14, 16) mènent des tourillons (1 à 7) vers les manetons (8 à 13) du vilebrequin, l'huile étant acheminée par l'intermédiaire des paliers principaux du vilebrequin, du fait que les canaux d'huile (14, 16) mènent respectivement à partir d'un palier principal ou d'un tourillon (2, 4, 6) vers les manetons (8 à 13) ou les coussinets de bielle respectivement adjacents de part et d'autre, sachant que dans les tourillons (2, 4, 6) concernés du vilebrequin sont prévus deux trous de lubrification (14, 16), qui délimitent entre eux un angle et qui, en convergeant vers un trou de lubrification (18), sont guidés vers les deux manetons (8, 9 et 10, 11 et 12, 13) adjacents, et les deux trous de lubrification (14, 16) sont en interaction avec les rainures d'alimentation d'huile (20, 22) prévues pour l'alimentation d'huile de lubrification dans les paliers principaux (II, IV, VI),
**caractérisée en ce qu'**il est prévu dans les paliers principaux (II, IV, VI) deux rainures d'alimentation d'huile (20, 22) tracées partiellement, qui sont réalisées en étant déviées de 90° par rapport au plan des forces des gaz.

2. Alimentation en huile de lubrification selon la revendication 1, **caractérisée en ce que** le vilebrequin est prévu pour un moteur à six cylindres horizontaux opposés, dans lequel les deux manetons (8, 9 et 10, 11 et 12, 13), adjacents aux tourillons (2, 4, 6), sont disposés l'un par rapport à l'autre en développant un angle de 180° sur le vilebrequin.

3. Alimentation d'huile de lubrification selon la revendication 1 ou 2, **caractérisée en ce que** les trous de lubrification (14, 16) dans les tourillons (2, 4, 6) du vilebrequin s'étendent en formant un angle de 90° environ, tandis que des rainures d'alimentation d'huile (20, 22) sont tracées sur une zone angulaire de 100° sur le vilebrequin.
